Europäisches Patentamt

European Patent Office

Office européen des brevets

(11) Publication number: **0 193 542**
**B1**

(12) **EUROPEAN PATENT SPECIFICATION**

(45) Date of publication of patent specification: **22.03.89**

(51) Int. Cl.⁴: **F 16 L 23/02**

(21) Application number: **85903890.3**

(22) Date of filing: **23.07.85**

(86) International application number:
**PCT/SE85/00292**

(87) International publication number:
**WO 86/00971 13.02.86 Gazette 86/04**

(54) **DOUBLE FLANGE FOR JOINING PIPE SECTIONS AND THE LIKE HAVING COLLARS.**

(30) Priority: **31.07.84 SE 8403920**

(43) Date of publication of application:
**10.09.86 Bulletin 86/37**

(45) Publication of the grant of the patent:
**22.03.89 Bulletin 89/12**

(84) Designated Contracting States:
**AT BE CH DE FR GB IT LI LU NL SE**

(56) References cited:
**DE-C- 352 875**
**FR-A-1 195 033**
**US-A-2 911 239**
**US-A-3 515 416**
**US-A-3 895 833**

(73) Proprietor: **OHLSSON, Lars, B.**
**Blomsterhultsgatan 2**
**S-598 00 Vimmerby (SE)**

(72) Inventor: **OHLSSON, Lars, B.**
**Blomsterhultsgatan 2**
**S-598 00 Vimmerby (SE)**

(74) Representative: **Siebmanns, Hubertus**
**Götalands Patentbyra AB Box 154**
**S-561 22 Huskvarna (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to flanges, which are composed of two parts, by means of which pipe sections having end collars or the like may be readily joined to each other. A double flange is placed around the end of each pipe section in a radial and/or an axial direction. Bolts or the like are pushed through holes in the two double flanges and tightened and thus, the double flanges are pressed against each other, the two pipe end collars being placed between the double flanges.

It is known in the art to join two pipe ends or the like to each other and to join a pipe end to a pipe end of a machine or some other fixed structure by means of two double flanges, the pipe ends being provided with collars or the like. In accordance with the French patent no. 1 195 033 each double flange half is composed of two entirely identical semicircular parts 9a and 9c and 9a$_1$ and 9c$_1$ respectively having centrally disposed holes and joined to each other, which parts solely partly overlap each other but are coaxially arranged. By doing so, two shoulders and two recesses are formed in each double flange half and the shoulder of one of the flange halves fits into the recess of the other flange half, when the double flange halves are fitted around the pipe end and simultaneously are pushed towards each other in a radial and/or axial direction. However, when the extent of overlapping of the double flange half portions increases, it will be, which is shown in figure 2 in said French patent, increasingly difficult to bring the double flange halves onto the pipe end in a radial direction without an embarrasing looseness as between each of the double flange halves and the pipe resulting.

The object of the present invention is primarily to be able to bring two complementary double flange halves, i.e. two such halves complementary to each other, onto a pipe end having a collar, solely in a radial or an radial as well as in an axial direction. Another object of the invention is to improve the mutual locking between the flange halves, when they are pushed towards each other in a radial and/or an axial direction, in order to facilitate the joining of two pipe ends to each other by means of two double flanges. A third object of the invention is to increase the tendency of the double flange halves to remain hanging around their pipe end, also when said portions have not yet been completely pushed into each other around the pipe end. A fourth object of the invention is to easily make the double flange halves keep their mutually locking positions, also when they jointly are turned around the pipe end in order to facilitate the joining of the pipe ends to each other, also in case the flange halves have not yet been completely pushed into each other, neither in a radial nor in an axial direction.

Surprisingly, I have found, in accordance with the present invention, that in case the concept of said French patent with a double flange half, which is composed of two flange half portions, which are identical and firmly joined to each other and coaxially disposed but overlapping to a varying degree, is abandoned and instead a double flange half is made, which is composed of a first flange half portion having such a large surface area, that it may only narrowly be pushed onto and around its pipe end in a radical direction, as well as a second flange half portion having such a complementary surface area, that the double flange half, composed of said first and said second flange half portion, together with a second double flange half composed in an identical manner, form a complete double flange around the pipe end, when the flange halves are pushed, in a radial and an axial direction onto and around the pipe end, then considerable advantages may be achieved as to the ability of the double flange halves to lock each other as well as the joining of two pipe ends against each other by means of the double flange, and, briefly expressed, said four objects of the present invention be attained.

Thus, the present invention relates to a double flange, which jointly with an identical double flange is used to join pipe sections having end collars or the like. The two double flanges are pressing, by means of bolts and screws or the like, the end collars between each other. The double flange is composed of two partially circularly formed flange halves, which are identical and complementary to each other. The two flange halves are in their turn composed of two partially circularly shaped disk portions provided with holes, which are joined to each other but only partially overlap and are coaxially disposed in relation to each other. The characterizing feature of the double flange according to the present invention is that one of the circular disk portions, the first one, is provided with a recess and thus only narrowly may be pushed onto its pipe end in a radial direction, while the second circular disk portion is provided with a larger recess and thus, jointly with said first disk portion, when joining the two disk portions, forms one of two identical complementary double flange halves, which constitute one complete double flange. The flange halves, which are composed of said first and said second circularly shaped disk portions easily may lock each other around their pipe end, preferably already before they have been completely pushed onto and around the pipe end and attained their maximum contact with the circumference of the pipe. The two complementary double flange halves, which are locking each other nicely, lock each other already before they have been pushed into each other, regardless of whether the pipe end is horizontally or vertically disposed. The advantages of this feature are particularly great in working positions difficult to get at.

The double flange of the invention is specifically defined in claim 1.

A circularly formed double flange half according to the present invention is produced e.g. by making a centrally disposed hole in a circularly shaped disk for the pipe and subsequently by making a rectilinear recess from the circumference of the disk to its central hole, the width of said recess being as large as the outer diameter of the pipe end, and by fastening the removed recess portion on top of said disk in a position, which is diametrically disposed in relation to said recess. Alternatively, the double flange half, which is provided with complementary characteristics and composed of two circularly shaped disk portions as described, may be cast all in one piece, preferably made of a plastic material or a light metal.

In special embodiments of the double halves according to the present invention the positions and the number of the bore holes, which are made in the halves, when the surface shapes of the flange half portions are determined, are taken into consideration. Suitably, the number of bore holes are increased, when the diameter of the pipe ends and the inner diameter of the double flange halves are increased.

The present invention will now be clarified in more detail as follows, reference being made to the annexed drawing, in which:

Fig. 1 is a perspective view of two double flanges according to the present invention, each of which is composed of two complementary double flange halves, which supplement each other to a complete double flange, which is to be mounted around a pipe end; and

Fig. 2—4 show, also in a perspective view, three various surface shapes of complementary double flange halves according to the present invention.

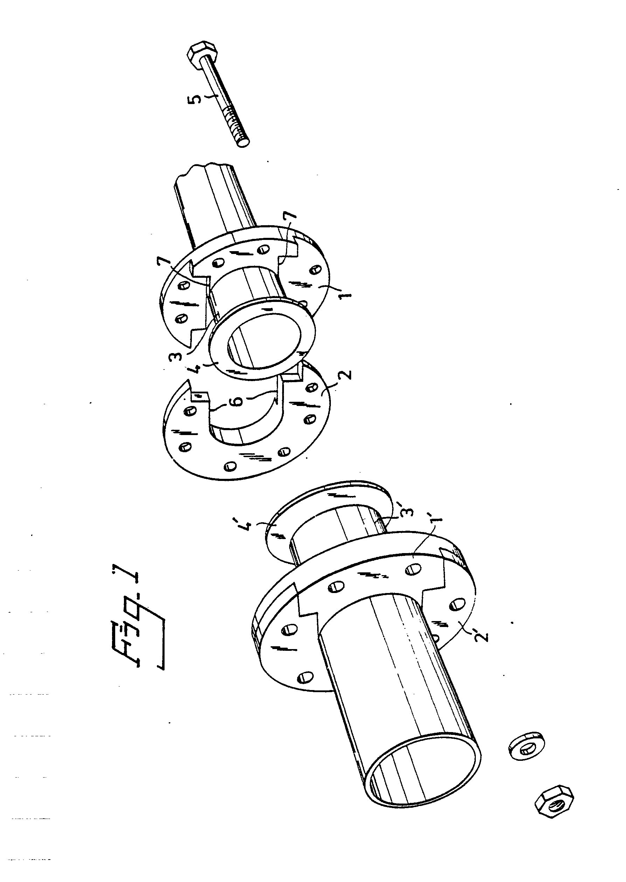

Fig. 1 shows how a double flange according to the present invention, which is composed of two complementary double flange halves 1 and 2, is mounted around a pipe end 3 having a collar 4. Provided an identical pipe end 3' having a collar 4' and together with an identical double flange 1', 2' are brought towards pipe end 3, pipe ends 3, 3' may be joined to each other. Bolts 5 (only one shown) will keep double flange halves 1 and 2 together, against each other, and double flanges 1, 2 and 1', 2' against each other, collars 4, 4' being inserted between the double flanges. When double flange half 2 in its original position, as shown in the drawing, is moved towards flange half 1, a satisfactory preliminary mutual locking is achieved at an early state, already when surfaces 6 of flange half 2 start gliding along surfaces 7 of flange half 1. When the double flange halves fully touch each other, a manual pressure against flange half 1 is propagated symmetrically against flange half 2 and vice versa. Thus, no torsional moments in the flange halves arise and thus, the flange halves touch each other firmly, when the technician is handling them and said other couple of double flange halves 1', 2' and wants to achieve a joining of pipe ends 3, 3'.

It is not difficult to attain such a friction between surfaces 6 and surfaces 7, that the two double flange halves 1 and 2, which fully or partially touch each other, remain in their mutually locking positions, also when they are jointly rotated around pipe end 3, and this is convenient to do, when pipe ends 3, 3' are joined, particularly when the work takes place in difficult to get at spaces and also when the double flange halves are attached around a pipe and against each other, when the pipe end is vertically disposed.

Figs. 2—4 show three embodiments, which have preferred surface configurations of each double flange half of the double flange according to the present invention.

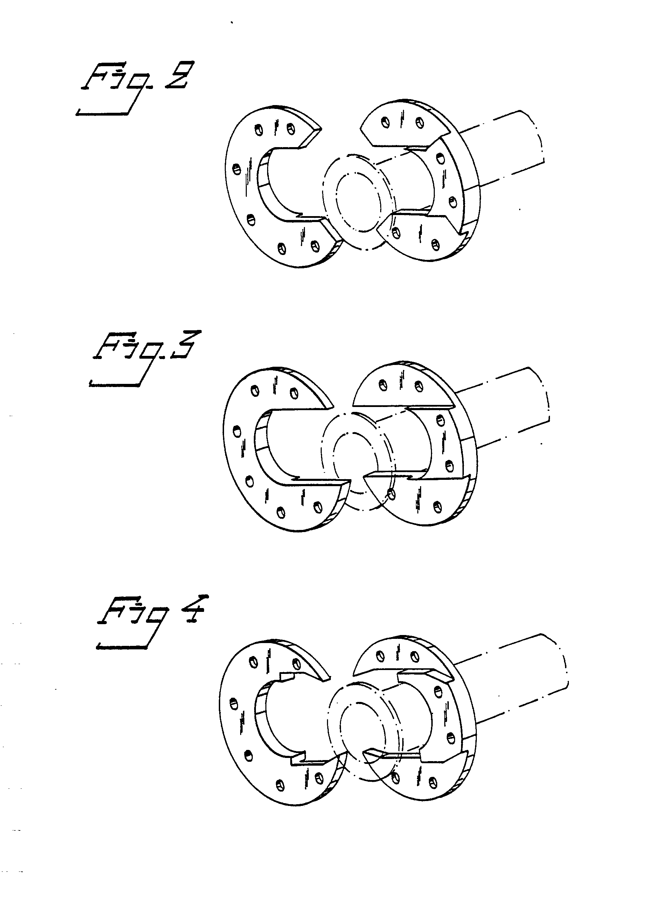

Fig. 4 shows double flange halves, which intitially must be moved in a radial direction against their pipe end to a full touch with the circumference of the pipe end, before they are moved in an axial direction against each other. However, in their final mounting positions they lock each other extremely well.

**Claims**

1. A double flange (1, 2) comprising two dismountable flange halves (1 and 2 respectively) provided with bolt holes, said double flange (1, 2) being intended to be used together with a substantially identical double flange (1', 2') for joining, to each other, two pipe sections (3, 3') having end collars (4, 4') or the like, whereby said double flanges (1, 2 and 1', 2') by means of bolts (5) or screws or the like therebetween press the end collars (4, 4') of said pipe sections against each other; each double flange comprising two at least substantially identical flange halves, each containing an opening with a substantially semicircularly shaped bottom corresponding to the circumference of the pipe sections (3, 3') and an open mouth; said flange halves (1, 2) in mounted position overlapping each other at protruding ears situated at the side of said opening, which ears engage in corresponding recesses in the opposite flange half (2, 1) characterized in that each flange half (1, 2) is divided in the axial direction into one greater and one smaller area disc portion each having a said opening; that in the greater disc portion the opening is slot-like with a portion thereof having at least substantially parallel sides and with a length greater than its width and two said ears protruding at the sides of said opening; and in that the smaller disc portion complementarily corresponds to a part of said opening in the greater disc portion adjacent the mouth of the opening, such that in assembled position the smaller disc portions fill up said parts of said openings in the greater disc portions; and in that the greater and the smaller disc portions in each flange half (1, 2) respectively are connected to each other.

2. A double flange as claimed in Claim 1, characterized in that said greater and said smaller disc portion of each of said double flange halves (1, 2) are cast all in one piece and preferably made of a plastic material or a light metal.

3. A double flange as claimed in Claim 1 or Claim 2, characterized in that the greater disc portions in each of said ears at the sides of said slot-like opening exhibit at least two bolt holes.

4. A double flange as claimed in at least one of the Claims 1—3, characterized in that the greater disc portions of the flange halves (1, 2) exhibit axially directed surfaces (6) defining the sides of the slotlike opening, said surfaces being at least partially parallel to each other and said surfaces being intended to cooperate with in corresponding way axially directed, complementary surfaces (7) of the smaller disc portion of an opposite flange half (2, 1).

5. A double flange as claimed in one or more of the Claims 1—4, characterized in that the greater disc portion at the inlet of the slotlike opening exhibit towards each other directed protrusions, and in that the complementary smaller disc portion exhibit correspondingly shaped bevels or recesses.

**Patentansprüche**

1. Doppelflansch (1, 2) mit zwei zerlegbaren und mit Bolzenbohrungen versehenen Flanschhälften (1 bzw 2), welcher Doppelflansch (1, 2) zur Anwendung zusammen mit einem im wesentlichen identischen Doppelflansch (1', 2') vorgesehen ist zum Zusammenfügen von zwei Rohrabschnitten (3, 3') mit Endkragen oder dergleichen (4, 4'), wobei genannte Doppelflansche (1, 2 und 1', 2') mittels Bolzen, Schrauben oder dergleichen (5) dazwischen zum Zusammenpressen der Endkragen (4, 4') genannter Rohrabschnitte gegeneinander vorgesehen sind; wobei jeder Doppelflansch zwei zumindest im wesentlichen gleiche Flanschhälften besitzt, wovon jede eine Öffnung mit einem im wesentlichen halbkreisförmig ausgeführten Boden entsprechend dem Umkreis der Rohrabschnitte (3, 3') und eine offene Mündung besitzt; und wobei genannte Flanschhälften (1, 2) in angebrachter Lage sich gegenseitig überlappen an vorragenden Ohren auf der Seite genannter Öffnung, welche Ohren mit entsprechenden Ausnehmungen in der gegenüberliegenden Flanschhälfte (2, 1) zusammenwirken, dadurch gekennzeichnet, dass jede Flanschhälfte (1, 2) in axialer Richtung aufgeteilt ist in einen grösseren und einen kleineren Scheibenteilbereich, wovon jeder eine genannte Öffnung besitzt; dass in dem grösseren Scheibenteil die Öffnung schlitzähnlich ausgeführt ist mit einem Teil, welcher zumindest im wesentlichen parallele Seiten und eine Länge besitzt, die grösser ist als dessen Breite und die zwei genannten Ohren ist, welche an den Seiten genannter Öffnung vorragen; und dass der kleinere Scheibenteil formschlüssig einem Teil genannter Öffnung in dem grösseren Scheibenteil benachbart der Mündung der Öffnung entspricht derart, dass in zusammengesetzter Lage die kleineren Scheibenteile die genannten Teile genannter Öffnungen in den grösseren Scheibenteilen ausfüllen; und dass die grösseren und die kleineren Scheibenteile in jeder betreffenden Flanschhälfte (1, 2) miteinander verbunden sind.

2. Doppelflansch nach Anspruch 1, dadurch gekennzeichnet, dass der genannte grössere und kleinere Scheibenteil jeder der genannten Doppelflanschhälften (1, 2) jeweils in einem Stück gegossen und vorzugsweise aus Kunststoff oder Leichtmetall gefertigt ist.

3. Doppelflansch nach Anspruch 1 oder 2, dadurch gekennzeichnet, dass die grösseren Scheibenteile in jedem der genannten Ohren auf den Seiten der genannten schlitzähnlichen Öffnung wenigstens zwei Bolzenbohrungen aufweisen.

4. Doppelflansch nach wenigstens einem der Ansprüche 1 bis 3, dadurch gekennzeichnet, dass die grösseren Scheibenteile der Flanschhälften (1, 2) axial gerichtete Flächen (6) aufweisen, welche die Seiten der schlitzähnlichen Öffnung bilden und dass die genannten Flächen wenigstens teilweise zueinander parallel verlaufen und zum Zusammenwirken mit in entsprechender Weise axial gerichteten, formschlüssigen Flächen (7) des kleineren Scheibenteiles einer entgegengesetzten Flanschhälfte (2, 1) vorgesehen sind.

5. Doppelflansch nach einem oder mehreren der Ansprüche 1 bis 4, dadurch gekennzeichnet, dass die grösseren Scheibenteile an der Mündung der schlitzähnlichen Öffnung gegeneinander gerichtete Vorsprünge aufweisen, und dass die formschlüssigen kleineren Scheibenteile entsprechend ausgeführte Schrägen oder Ausnehmungen aufweisen.

**Revendications**

1. Double bride (1, 2) comprenant deux moitiés démontables de bride (1 et 2 respectivement) pourvues de trous de boulon, ladite double bride (1, 2) étant destinée à être utilisée avec une double bride (1', 2') sensiblement identique pour joindre, l'une à l'autre, deux sections de tube (3, 3') ayant des colliers extrêmes (4, 4') ou analogues, lesdites doubles brides (1, 2 et 1', 2'), au moyen de boulons (5) ou vis ou analogues entre elles, pressant les colliers extrêmes (4, 4') desdites sections de tube l'une contre l'autre; chaque double bride comprenant deux moitiés de bride au moins sensiblement identiques, chacune contenant une ouverture avec un fond de forme sensiblement semi-circulaire correspondant à la circonférence des sections de tube (3, 3') et une embouchure ouverte; lesdites moitiés de bride (1, 2), en position montée, se recouvrant à des oreilles en saillie situées sur le côté de ladite ouverture, lesquelles oreilles s'engagent dans des évidements correspondants dans la moitié de bride opposée (2, 1), caractérisée en ce que chaque moitié de bride (1, 2) est divisée en direction axiale en une portion de disque de plus grande et une de plus petite surface, chacune ayant ladite ouverture; en ce que dans la plus grande portion de disque, l'ouverture ressemble à une fente avec une portion ayant des côtés au moins sensiblement parallèles et avec une longueur axiale plus grande que sa largeur et deux desdites oreilles dépassant des côtés de ladite ouverture; et en ce que la plus petite portion de disque correspond de manière complémentaire à une partie de ladite ouverture dans la plus grande portion de disque à proximité de l'embouchure de l'ouverture de manière qu'à la position assemblée, les plus petites portions de disque remplissent lesdites parties desdites ouvertures dans les plus grandes portions de disque; et en ce que les plus grande et plus petite portions de disque dans chaque moitié de bride (1, 2) sont respectivement connectées l'une à l'autre.

2. Double bride selon la revendication 1, caractérisée en ce que ladite plus grande et ladite plus petite portion de disque de chacune desdites moitiés de double bride (1, 2) sont moulées en une seule pièce et de préférence faites en une matière plastique ou en un métal léger.

3. Double bride selon la revendication 1 ou la revendication 2, caractérisée en ce que les plus grandes portions de disque dans chacune desdites oreilles sur les côtés de ladite ouverture en forme de fente présentent au moins deux trous de boulon.

4. Double bride selon au moins l'une des revendications 1—3, caractérisée en ce que les plus grandes portions de disque des moitiés de bride (1, 2) présentent des surfaces axialement dirigées (6) définissant les côtés de l'ouverture en forme de fente, lesdites surfaces étant au moins partiellement parallèles les unes aux autres et lesdites surfaces étant destinées à coopérer avec des surfaces complémentaires, dirigées axialement de manière correspondante (7) de la plus petite portion de disque d'une moitié de bride opposée (2, 1).

5. Double bride selon une ou plusieurs des revendications 1—4, caractérisée en ce que la plus grande portion de disque à l'entrée de l'ouverture en forme de fente présentent des protubérances dirigées l'une vers l'autre et en ce que la plus petite portion de disque complémentaire présente des biseaux ou évidements de forme correspondante.

Fig.1

EP 0 193 542 B1

Fig. 2

Fig.3

Fig 4